# EUROPEAN PATENT SPECIFICATION

(11) **EP 1 633 584 B1**
(45) Date of publication and mention of the grant of the patent: **23.05.2012**
(21) Application number: 04773946.1
(22) Date of filing: 17.06.2004
(51) Int. Cl.: B60H 1/32

(54) **AIR-CONDITIONING APPARATUS FOR A VEHICLE**
KLIMAGERÄT FÜR EIN FAHRZEUG
CLIMATISEUR POUR AUTOMOBILE

(30) Priority: 17.06.2003 KR 2003039040
(43) Date of publication of application: 15.03.2006
(73) Proprietor: Halla Climate Control Corporation, Daejeon-si 306-230 (KR)
(72) Inventor: MOON, Jeoungsik c/o Halla Climate Control Corporation, Daedeok-gu, Daejeon-si 306-230 (KR); KIM, Yongsik c/o Halla Climate Control Corporation, Daedeok-gu, Daejeon-si 306-230 (KR)
(74) Representative: Koepe, Gerd L.
(86) International application number: PCT/KR2004/001444
(87) International publication number: WO 2004/110798

(56) References cited:
- JP-A- 1 318 866
- JP-A- 11 020 463
- JP-A- 11 020 463
- JP-A- 11 123 928
- JP-A- 2003 042 599
- KR-A- 2001 064 286
- US-A1- 2004 074 246
- US-B1- 6 318 116

## Description

### Technical Field

The present invention relates to an air-conditioning apparatus for a vehicle, more particularly, to an air conditioning apparatus which provides a joining point of refrigerant discharged from the front and back seat side evaporators at the suction side of a compressor to allow lubricant oil to smoothly flow into the compressor without collection within the refrigerant pipes connected to the back seat side evaporators, thereby preventing a degradation in endurance of the compressor.

### Background Art

As well known in the art, an air-conditioning apparatus for a vehicle serves to heat or cool the air while introducing it from the outside into an automobile or while circulating it through inside of the automobile in order to heat or cool inside of the automobile. The air-conditioning apparatus for a vehicle has an evaporator for a cooling function and a heater for a heating function, and is structured to circulate the air cooled or heated by the evaporator or heater inside the automobile.

In the meantime, large sized recreational automobiles such as minivans and luxury automobiles are currently increasing in demand.

According to such a trend, the air-conditioning apparatus for a vehicle is changing from a single type system, which is arranged only in the front seat side inside the automobile to a dual type system, which is arranged both in the front, and back seat sides inside automobile.

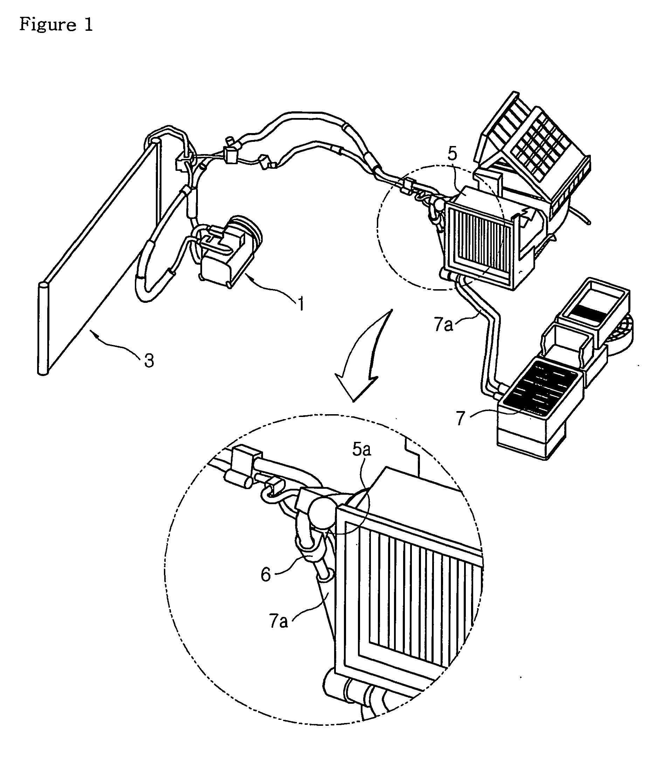

As shown in FIG. 1, a cooling cycle of the typical dual type air-conditioning apparatus for a vehicle has blowing units with evaporators 5 and 7, which are installed separately in front and back seat sides. This cooling cycle also has uses a compressor 1 and a condenser 3, which are commonly used in both the front and back seat sides.

The dual type air-conditioning apparatus for a vehicle operates in a single mode so that refrigerant is fed only into the front seat side evaporator 5 but not into the back seat side evaporator 7 if a passenger is not seated in the back seat side of an automobile.

In the typical dual type air-conditioning apparatus for a vehicle, when passengers are seated in the front and back seats, in the event of feeding refrigerant to both the front and back seat side evaporators 5 and 7, the compressor 1 is operated normally.

However, when the passengers are not seated in the back seat, refrigerant is not fed into the evaporator 7 in the back seat side. In this case, lubricant oil in the compressor 1 is partially congested through the entire portion of a refrigerant discharge pipe 7a of the evaporator 7 in the back seat side to bring an abnormal operation to the compressor 1.

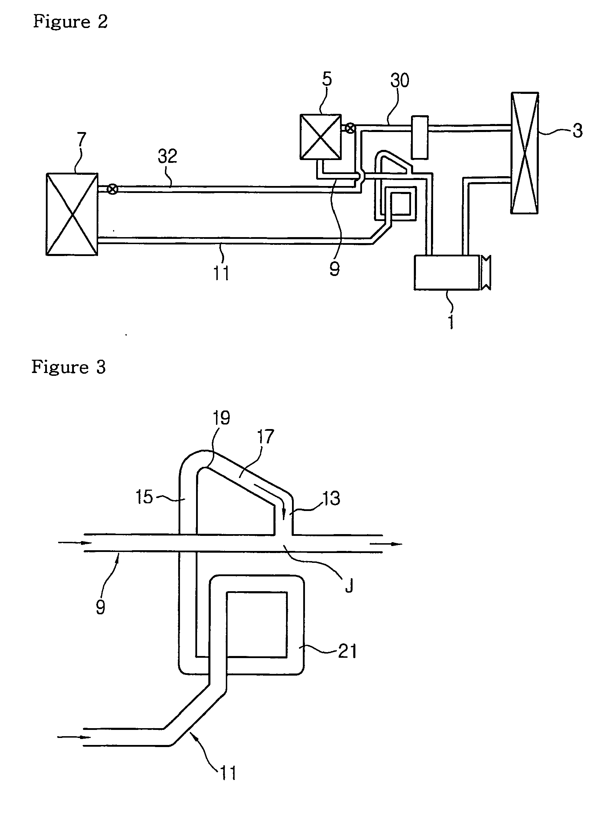

A conventional technique developed to solve this problem as shown in FIGS 2 and 3 includes a compressor 1 for inhaling and compressing refrigerant to force-feed it into the condenser 3 and front and back seat side evaporators 5 and 7 for receiving refrigerant from the condenser 3 to make refrigerant exchange heat with blown air. Upon being heat exchanged in the front and back seat side evaporators 5 and 7, refrigerant is inhaled into the compressor 1.

The compressor 1 circulates refrigerant mixed with lubricant oil.

The front seat side evaporator 5 has a refrigerant outlet portion connected via a second refrigerant pipe 9 to a refrigerant inlet portion of the compressor 1, and the back seat side evaporator 7 has a refrigerant outlet portion connected via a second refrigerant pipe 11 to a refrigerant outlet portion of the compressor 1.

Herein the reference numeral 30 indicates a refrigerant pipe connected to the condenser 3 and the front seat side evaporator 5 to feed refrigerant between them, and the reference numeral 32 indicates a branch refrigerant pipe 32 diverged from the refrigerant pipe 30 to feed refrigerant in part to the back seat side evaporator 7.

As shown in FIG. 3, the second refrigerant pipe 11 is projected upward from a junction J of the first refrigerant pipe 9.

The second refrigerant pipe 11 forms an elastic bend 13 that is bent at about 180° from the junction J, and has a descending portion 15 leaded from a refrigerant outlet side of the back seat side evaporator 7 to the elastic bend 13.

The elastic bend 13 has a first bend inclination 17 inclined down to the junction J and a second bend inclination 19 inclined down to the descending portion 15.

In this case, the first bend inclination 17 of the elastic bend 13 is formed to occupy a larger portion than that of the second bend inclination 19.

The second refrigerant pipe 11 positioned under the descending portion 15 is provided with an oil cutoff bend 21 that is folded for 360°.

The first refrigerant pipe 9 is installed with a height difference for about 100mm or more from the second refrigerant pipe 11.

That is, the fist refrigerant pipe 9 is installed higher for at least 100mm than the second refrigerant pipe 11.

In the conventional technique as above, when passengers are not seated in the back seats, if the compressor 1 is operated so that refrigerant is not fed into the back seat side evaporator 7 but fed into the front seat side evaporator 5, a cooling cycle is realized in such a fashion that refrigerant vapor having a low pressure discharged from the front seat side evaporator 5 flows through the first refrigerant pipe 9 into the compressor 1.

Low-pressure refrigerant vapor flowing through the first refrigerant pipe 9 toward the compressor 1 is introduced into the inlet side of the compressor 1 through the junction J connected to the second refrigerant pipe 11.

Also, according to the conventional technique, the first refrigerant pipe 9 is connected to the second refrigerant pipe 11 via the junction J and the elastic bend 13 is provided to the second refrigerant pipe 11 so that a portion of low pressure refrigerant vapor which has reached the junction J from the first refrigerant pipe 9 may flow backward into the elastic bend 13.

Low-pressure refrigerant vapor, which has flown backward into the elastic, bend 13 flows into the second refrigerant pipe 11 via the first and second bend inclinations 17 and 19.

After having flown into the second refrigerant pipe 11, low-pressure refrigerant vapor remains in the oil cutoff bend 21.

However, in the conventional technique, when the compressor 1 is operated continuously, a portion of low pressure refrigerant vapor discharged through the front seat side evaporator 5 collects in the oil cutoff bend 21 and a specific quantity of oil from the compressor 1 is also collected therein.

This as a result causes a problem in that the compressor 1 is not normally operated when at least a predetermined quantity of oil from the compressor 1 is collected in the oil cutoff bend 21 of the second refrigerant pipe 11.

Further, there is another drawback in that installation is restricted in view of an engine room, which can rarely provide a sufficient space since the first, and second refrigerant pipes 9 and 11 are necessarily installed with a predetermined height difference.

The document JP-A 11-020,463 discloses an air conditioning system for a vehicle, wherein the refrigerant piping from the front side evaporator and the refrigerant piping from the rear side evaporator are joined at a confluence point and the combined refrigerant is fed to the compressor via a separate piping line.

The document US-B 6,318,116 relates to an accumulator-dehydrator used in an air conditioning system for a vehicle, said system having at least a first and a second evaporator and a compressor interconnected by refrigerant lines containing refrigerant. The accumulator-dehydrator first and second inlets are all connected to the evaporators through refrigerant lines, and an outlet from the accumulator-dehydrator is connected to the compressor through another refrigerant line. A baffle is mounted inside the accumulator-dehydrator at either the first or second inlet. The baffle has a housing with an opening to allow liquid refrigerant and oil discharged from one of the evaporators to enter the accumulator-dehydrator and prevent liquid refrigerant and oil from within the accumulator-dehydrator from re-entering the inlet.

The document JP-A 01-318,866 discloses an accumulator used in an air conditioning system for a vehicle, said system having at least a first and a second evaporator and a compressor interconnected by refrigerant lines containing refrigerant. The accumulator first and second inlets are all connected to the evaporators through refrigerant lines, and an outlet from the accumulator is connected to the compressor through another refrigerant line. A blind plate is mounted inside the accumulator below the first or second inlet, and the incoming refrigerant impinges on, and thereafter passes through holes therein, said blind plate while being rapidly expanded, and the sound of the incoming and expanding refrigerant is suppressed by a damping action. Gaseous refrigerant is fed to the compressor via the gas outlet port and the refrigerant line.

### Disclosure of the Invention

The present invention has been devised to solve the foregoing problems of the prior art and it is therefore an object of the invention to provide an air-conditioning apparatus for a vehicle which establishes a joining point of refrigerant discharged from the front and back seat side evaporators at the suction side to allow lubricant oil to smoothly flow into the compressor without collection within the refrigerant pipes connected to the back seat side evaporators, thereby preventing a degradation in endurance of the compressor.

According to an aspect of the invention for realizing the above objects, there is provided an air-conditioning apparatus for a vehicle comprising: a compressor for inhaling and compressing refrigerant; a condenser for condensing high temperature and pressure refrigerant discharged from the compressor; main throttling means for throttling a portion of refrigerant discharged from the condenser; at least one subsidiary throttling means for throttling the remainder of the refrigerant; a main evaporator for causing refrigerant having passed through the main throttling means to exchange heat with blown air; at least one subsidiary evaporator for causing refrigerant having passed through the subsidiary throttling means to exchange heat with blown air; a refrigerant piping for connecting the compressor, the condenser, the main and subsidiary throttling means and the main and subsidiary evaporators together to realize a cooling cycle; and refrigerant joining means including a plurality of suction passages connected with the first and second refrigerant pipes of the main and second subsidiary evaporators to inhale refrigerant therein and a connection port communicating with the suction passages and connected to the suction port of the compressor for allowing refrigerants having passed through the suction passages to join therethrough to be introduced into the compressor, [(insert page 6a)].

### Brief Description of the Drawings

FIG. 1 is a schematic perspective view illustrating the outline of a general automobile dual type air-conditioning apparatus for a vehicle,
FIG. 2 is a schematic view illustrating a cooling cycle in a conventional automobile dual type air-conditioning apparatus for a vehicle,
FIG. 3 is a magnification of an important part in FIG. 2,
FIG. 4 is a perspective view illustrating the outline of an air-conditioning apparatus for a vehicle of the invention,
FIG. 5 is a perspective view illustrating a cooling cycle in the air-conditioning apparatus for a vehicle of the invention, wherein the refrigerant joining means comprises a joint block installed in the suction port of the compressor, said joint block integrally having the suction passages and the connection port, wherein the connection port is provided on an extension line of the suction passage connected with the second refrigerant pipe.
FIG. 6 is a perspective view illustrating the installation of first and second refrigerant pipes of the invention,
FIG. 7 is a front elevation view illustrating the first and second refrigerant pies in FIG. 6,
FIG. 8 is a front elevation view illustrating a joint block of the invention,
FIG. 9 is a sectional view taken along the indicator line A-A in FIG. 8,
FIG. 10 is a sectional view taken along the indicator line B-B in FIG. 8, and
FIG. 11 is a sectional view illustrating an alternative to the joint block of the invention.

### Best Mode for Carrying Out the Invention

Hereinafter a preferred embodiment of an air-conditioning apparatus for a vehicle of the invention will be described in detail with reference to the accompanying drawings.

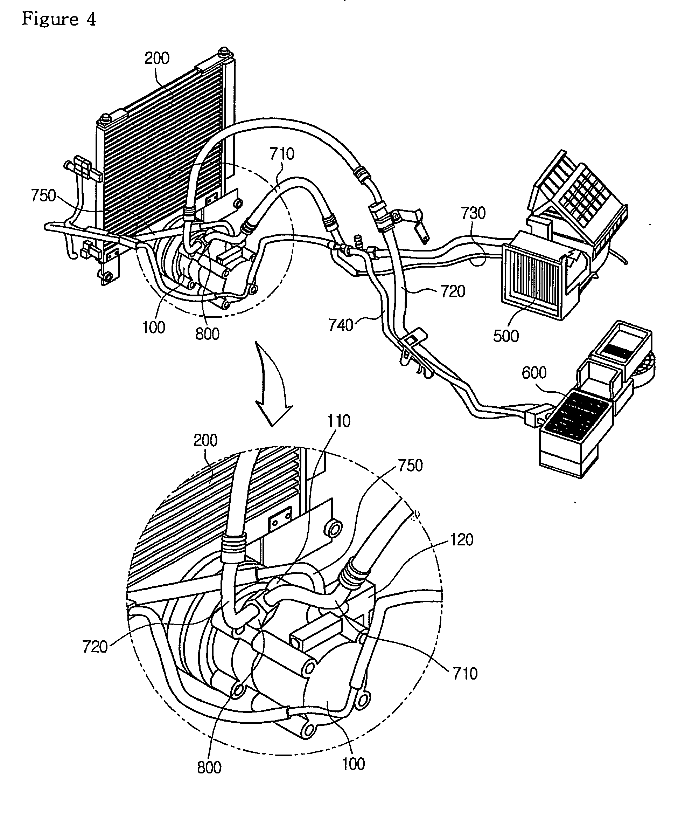

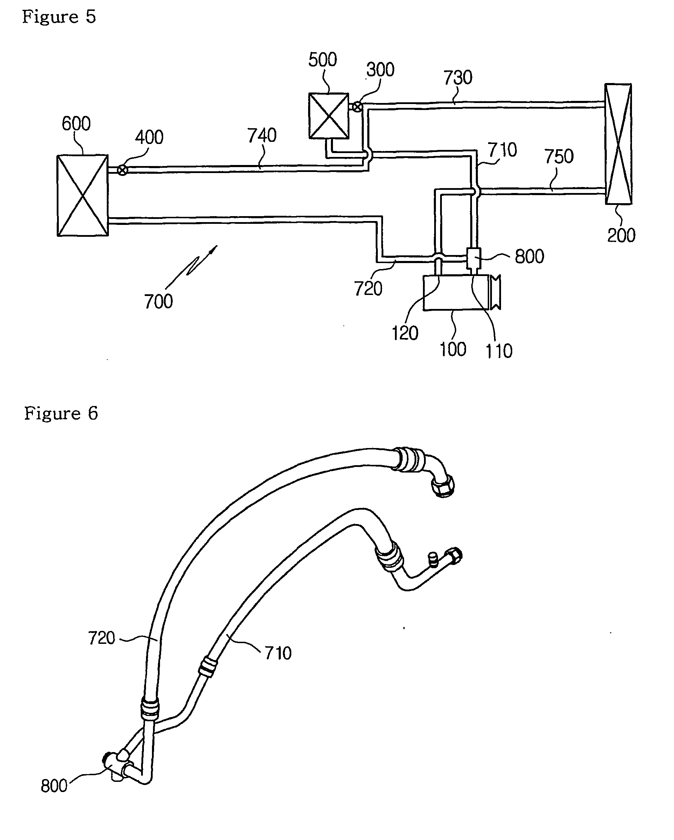

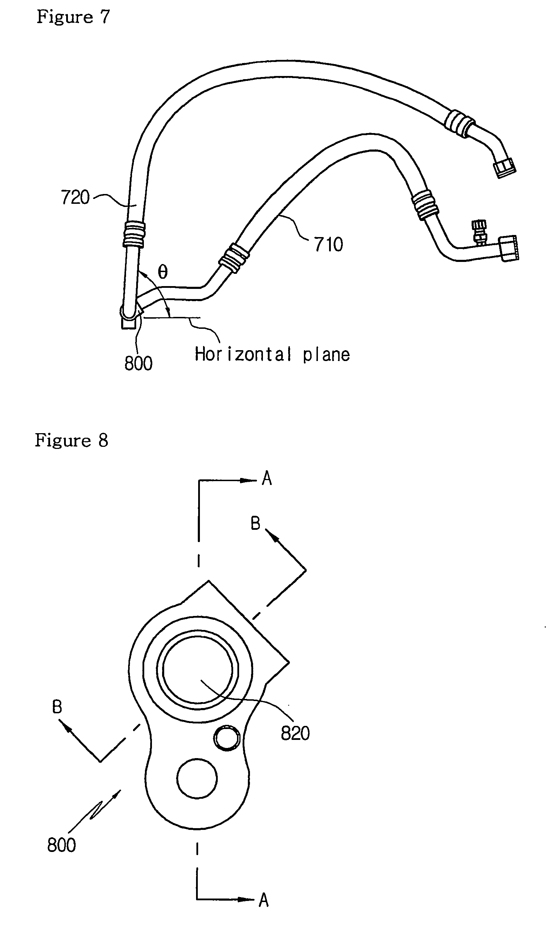

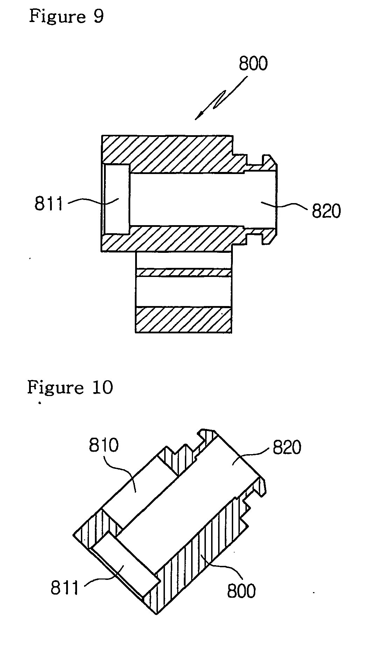

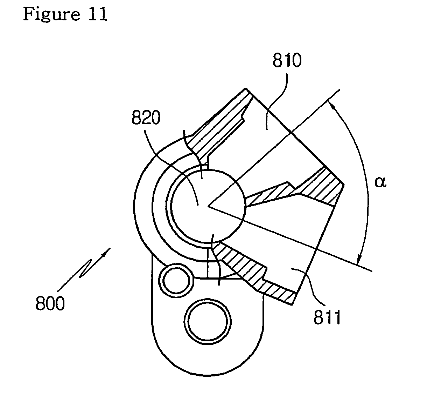

FIG. 4 is a perspective view illustrating the outline of an air-conditioning apparatus for a vehicle of the invention, FIG. 5 is a perspective view illustrating a cooling cycle in the air-conditioning apparatus for a vehicle of the invention, FIG. 6 is a perspective view illustrating the installation of first and second refrigerant pipes of the invention, FIG. 7 is a front elevation view illustrating the first and second refrigerant pies in FIG. 6, FIG. 8 is a front elevation view illustrating a joint block of the invention, FIG. 9 is a sectional view taken along the indicator line A-A in FIG. 8, FIG. 10 is a sectional view taken along the indicator line B-B in FIG. 8, and FIG. 11 is a sectional view illustrating an alternative to the joint block of the invention.

As shown in the drawings, the air-conditioning apparatus for a vehicle of the invention includes a compressor 100, a condenser 200, a main throttle unit 300, a subsidiary throttle unit 400, a main evaporator 500, a subsidiary evaporator 600, a refrigerant piping 700 and a refrigerant joining unit.

The compressor 100 is installed within an engine room of an automobile to inhale and compress refrigerant, and has a suction port 110 for inhaling refrigerant and a discharge port 120 for discharging refrigerant..

The condenser 200 serves to condense high temperature and pressure refrigerant discharged from the compressor 100.

The main throttle unit 300 serves to throttle or restrict a portion of refrigerant discharged from the condenser 200.

The subsidiary throttle unit 400 is provided in at least a single number in order to throttle the remainder of refrigerant that is not throttled by the main throttle unit 300.

The main and subsidiary throttle units 300, 400 are provided in the form of electronic expansion valve according to a preferred embodiment.

The main evaporator 500 serves to cause refrigerant having passed through the main throttle unit 300 to exchange heat with blown air.

The subsidiary evaporator 600 is provided in at least a single number in order to cause refrigerant having passed through the subsidiary throttle unit 400 to exchange heat with blown air.

Herein the number of the subsidiary evaporator 600 is varied according to the number of the subsidiary throttle unit 400.

The compressor 100, the condenser 200 and the main evaporator 500 are installed in the engine room of the automobile, and the subsidiary evaporator 600 is installed adjacent to back seats according to the size of the automobile.

Therefore, the main evaporator 500 is used to cool the front seat side inside the automobile and the subsidiary evaporator 600 is used to cool the back seat side inside the automobile.

The refrigerant piping 700 connects the compressor, the condenser 200, the main and subsidiary throttle units 300 and 400 and the main and subsidiary evaporators 500, 600 together to realize a cooling cycle.

The refrigerant piping 700 includes first and second refrigerant pipes 710 and 720 for feeding refrigerant discharged from the main and subsidiary evaporators 500 and 600 into the compressor 100, a third refrigerant pipe 730 for feeding refrigerant discharged from the condenser 200 into the main evaporator 500, a fourth refrigerant pipe 740 branched from the third refrigerant pipe 730 for feeding a portion of refrigerant into the subsidiary evaporator 600 and a fifth refrigerant pipe 750 for feeding refrigerant discharged from a discharge port 120.

The fourth refrigerant pipe 740 may be branched in plurality from the third refrigerant pipe 730 according to the number of the subsidiary evaporators 600.

As shown in FIGS. 8 to 11, the refrigerant joining unit includes a plurality of suction passages 810, 811 connected with the first and second refrigerant pipes 710, 720 of the main and second subsidiary evaporators 500, 600 to inhale refrigerant therein and a connection port 820 communicating with the suction passages 810, 811 and connected to the suction port 110 of the compressor 100 for allowing refrigerant having passed through the suction passages 810, 811 to join therethrough to be introduced into the compressor 100.

The refrigerant joining unit is provided in the form of a joint block 800, which integrally has the plurality of suction passages 810, 811 and the connection port 820.

With the construction of the invention as above, the suction passage 810 connected with the first refrigerant pipe 710 of the main evaporator 500, the suction passage 811 connected with the second refrigerant pipe 720 of the subsidiary evaporator 600 are intersected perpendicularly with each other within the joint block 800 as shown in FIG. 10.

However, as shown in FIG. 11, the suction passages 810 and 811 may be provided to maintain a predetermined angle α instead of being intersected perpendicularly as above.

The connection port 820 of the joint block 800 is arranged coaxial with the suction port 110 of the compressor 100 as shown in FIG. 10.

As shown in FIG. 10, the connection port 820 is provided on an extension line of the suction passage 811 connected with the second refrigerant pipe 720.

Also, the second refrigerant pipe 720 of the subsidiary evaporator 600 is provided at an angle θ which is preferably determined in a range from about 10 to 170° with respect to a horizontal plane as shown in FIGS. 6 and 10.

Hereinafter the operation of the invention will be described as follows.

For example, when passengers are seated in front and back seats, if the compressor 100 is operated with refrigerant being fed into the front and back seat side main and subsidiary evaporators 500 and 600, a high temperature and pressure refrigerant discharged from the compressor 100 is fed along the fifth refrigerant pipe 750 into the condenser 200 according to the cooling cycle.

Then, condensed refrigerant after being introduced into the condenser 200 is fed along the third refrigerant pipe 730, throttled by the main throttle unit 300 installed in the front end of the front seat side main evaporator 500, and then introduced into the front seat side main evaporator 500.

In the meantime, a portion of refrigerant fed along the third refrigerant pipe 730 is diverged into the fourth refrigerant pipe 740 branched from the third refrigerant pipe 730, throttled by the subsidiary throttle unit 400 installed in the front end of the back seat side subsidiary evaporator 600, and introduced into the back seat side subsidiary evaporator 600.

As described above, the front and back seat side main and subsidiary evaporators 500, 600 allow refrigerant having passed through the main and subsidiary throttle units 300, 400 to exchange heat with blown air.

After passing through the front and back seat side main and subsidiary evaporators 500, 600 and being converted into a low pressure and vapor state, refrigerant flows through the first refrigerant pipe 710 and the second refrigerant pipe 720 to join into the joint block 800 of the refrigerant joining unit installed in the suction port 110 of the compressor 100 before being introduced into the compressor 100.

If passengers are not seated in the back seats inside the automobile, refrigerant is fed only into the front seat side main evaporator 500 without being fed into the back seat side subsidiary evaporator 600.

Upon the operation of the compressor 1 in the above state, high temperature and pressure refrigerant discharged from the compressor 100 is fed along the fifth refrigerant pipe 750 and introduced into the condenser 200.

After being introduced into the condenser 200, condensed refrigerant is fed along the third refrigerant pipe 730, throttled by the main throttle unit 300 installed in the front end of the front seat side main evaporator 500, and introduced into the front seat side main evaporator 500.

In the meantime, a trace quantity of refrigerant may flow into the fourth refrigerant pipe 740 according to the opening/closing of the main throttle unit 300 while being fed along the third refrigerant pipe 730.

However, the majority of refrigerant flowing along the third refrigerant pipe 730 is introduced into the front seat side main evaporator 500.

Then, the front seat side main evaporator 500 causes refrigerant having passed through the main throttle unit 300 to exchange heat with the blown air.

After having passed through the front seat side main evaporator 500 and being converted into a low pressure and vapor state, refrigerant is fed through the first refrigerant pipe 710, the suction passage 810 of the joint block 800 of the refrigerant joining unit installed in the suction port 110 of the compressor 100, and the connection port 820 before being introduced into the compressor 100.

Also, lubricant oil is introduced from the second refrigerant pipe 720 into the compressor 100 upon the actuation of the compressor 100 to prevent the deficiency of lubricant oil necessary for the operation of the compressor 100, thereby preventing degradation in endurance of the compressor.

According to the invention as described hereinbefore, in addition to a dual type air-conditioning apparatus for a vehicle having evaporators installed not only in the engine room of the automobile but also in the back seat side, at least three evaporators can be provided to supply cold air toward back seats inside an automobile having plural rows of back seats.

Of course, the first and second refrigerant pipes 710, 720 connected to the front and back seat side main and subsidiary evaporators 500, 600 can be exchanged in their positions.

### Industrial Applicability

According to the invention as described hereinbefore, a joining point of refrigerant discharged from the front and back seat side evaporators 500, 600 is provided at the suction side 110 to allow lubricant oil to smoothly flow into the compressor 100 without collection within the refrigerant pipes connected to the back seat side evaporator(s) 600, thereby preventing a degradation in endurance of the compressor 100.

## Claims

1. An air-conditioning apparatus for a vehicle comprising:
a compressor (100) for inhaling and compressing refrigerant;
a condenser (200) for condensing high temperature and pressure refrigerant discharged from the compressor (100);
main throttling means (300) for throttling a portion of refrigerant discharged from the condenser (200);
at least one subsidiary throttling means (400) for throttling the remainder of the refrigerant;
a main evaporator (500) for causing refrigerant having passed through the main throttling means (300) to exchange heat with blown air;
at least one subsidiary evaporator (600) for causing refrigerant having passed through the subsidiary throttling means (400) to exchange heat with blown air;
a refrigerant piping (700) for connecting the compressor (100), the condenser (200), the main and subsidiary throttling means (300, 400) and the main and subsidiary evaporators (500, 600) together to realize a cooling cycle; and
refrigerant joining means including a plurality of suction passages (810, 811) connected with the first and second refrigerant pipes (710, 720) of the main and second subsidiary evaporators (500, 600) to inhale refrigerant therein and a connection port (820) communicating with the suction passages (810, 811) and connected to the suction port (110) of the compressor (100) for allowing refrigerants having passed through the suction passages (810, 811) to join therethrough to be introduced into the compressor (100), **characterized in that** the refrigerant joining means comprises a joint block (800) installed in the suction port (110) of the compressor (100), said joint block (800) integrally having the suction passages (810, 811) and the connection port (820), wherein the connection port (820) is provided on an extension line of the suction passage (811) connected with the second refrigerant pipe (720).

2. The air-conditioning apparatus for a vehicle according to claim 1, wherein the suction passage (810) connected with the first refrigerant pipe (710) of the main evaporator (500) is intersected perpendicularly with the suction passage (811) connected with the second refrigerant pipe (720) of the subsidiary evaporator (600) within the joint block (800).

3. The air-conditioning apparatus for a vehicle according to claim 1, wherein the connection port (820) of the joint block (800) is installed coaxially with the suction port (110) of the compressor (100).

4. The air-conditioning apparatus for a vehicle according to claim 1, wherein the second refrigerant pipe (720) of the subsidiary evaporator (600) is installed at an angle θ ranging from about 10° to 170° with respect to a horizontal plane.

## Patentansprüche

1. Klimaanlagen-Vorrichtung für ein Fahrzeug, umfassend:
- einen Kompressor (100) zum Ansaugen und Komprimieren eines Kühlmittels;
- einen Kühler (200) zum Kondensieren von bei hoher Temperatur und hohem Druck befindlichem Kühlmittel, das von dem Kompressor (100) abgelassen wird;
- eine Haupt-Drosselungs-Einrichtung (300) zum Drosseln einer Teilmenge von Kühlmittel, das von dem Kühler (200) abgelassen wird;
- wenigstens eine Neben-Drosselungs-Einrichtung (400) zum Drosseln des Restes des Kühlmittels;
- einen Haupt-Verdampfer (500) zum Bewirken, dass Kühlmittel, das durch die Haupt-Drosselungs-Einrichtung (300) hindurchgetreten ist, Wärme mit angeblasener Luft austauscht;
- wenigstens einen Neben-Verdampfer (600), zum Bewirken, dass Kühlmittel, das durch die Neben-Drosselungs-Einrichtung (400) hindurchgetreten ist, Wärme mit angeblasener Luft austauscht;
- ein Kühlmittel-Leitungssystem (700), zum Verbinden des Kompressors (100), des Kühlers (200), der Haupt- und Neben-Drosselungs-Einrichtungen (300, 400) und der Haupt- und Neben-Verdampfer (500, 600) miteinander, um einen Kühl-Kreislauf zu realisieren; und
- eine Kühlmittel-Zusammenfluss-Einrichtung, die einschließt: eine Vielzahl von Ansaug-Kanälen (810, 811), die mit den ersten und zweiten Kühlmittel-Leitungen (710, 720) des Haupt-Verdampfers und des zweiten Neben-Verdampfers (500, 600) verbunden sind und so darin Kühlmittel ansaugen, und einen Verbindungs-Anschluss (820), der in Verbindung mit den Ansaug-Kanälen (810, 811) steht und verbunden ist mit dem Ansaug-Anschluss (110) des Kompressors (100), um zu ermöglichen, dass Kühlmittel, die durch die Ansaug-Kanäle (810, 811) hindurchgetreten sind, durch diese hindurch zusammenfließen und so in den Kompressor (100) eingeleitet werden, **dadurch gekennzeichnet, dass** die Kühlmittel-Zusammenfluss-Einrichtung einen Anschluss-Block (800) umfasst, der in dem Ansaug-Anschluss (110) des Kompressors (100) installiert ist, wobei der Anschluss-Block (800) eingebaut die Ansaug-Kanäle (810, 811) und den Verbindungs-Anschluss (820) aufweist, und worin der Verbindungs-Anschluss (820) an einer Neben-Leitung des Ansaug-Kanals (811) vorgesehen ist, der mit der zweiten Kühlmittel-Leitung (720) verbunden ist.

2. Klimaanlagen-Vorrichtung für ein Fahrzeug nach Anspruch 1, worin der Ansaug-Kanal (810), der mit der ersten Kühlmittel-Leitung (710) des Haupt-Verdampfers (500) verbunden ist, sich senkrecht mit dem Ansaug-Kanal (811) schneidet, der mit der zweiten Kühlmittel-Leitung (720) des Hilfs-Verdampfers (600) innerhalb des Anschluss-Blocks (800) verbunden ist.

3. Klimaanlagen-Vorrichtung für ein Fahrzeug nach Anspruch 1, worin der Verbindungs-Anschluss (820) des Anschluss-Blocks (800) koaxial mit dem Ansaug-Kanal (110) des Kompressors (100) installiert ist.

4. Klimaanlagen-Vorrichtung für ein Fahrzeug nach Anspruch 1, worin die zweite Kühlmittel-Leitung (720) des Neben-Verdampfers (600) in einem Winkel θ installiert ist, der im Bereich von etwa 10° bis 170° in Bezug auf eine horizontale Ebene installiert ist.

## Revendications

1. Appareil de climatisation pour un véhicule comprenant :
un compresseur (100) pour aspirer et compresser un réfrigérant ;
un condenseur (200) pour condenser un réfrigérant hautes température et pression déchargé du compresseur (100) ;
un moyen de régulation principal (300) pour réguler une partie du réfrigérant déchargé du condenseur (200) ;
au moins un moyen de régulation secondaire (400) pour réguler le reste du réfrigérant ;
un évaporateur principal (500) pour faire que le réfrigérant étant passé à travers le moyen de régulation principal (300) échange de la chaleur avec de l'air soufflé ;
au moins un évaporateur secondaire (600) pour faire que le réfrigérant étant passé à travers le moyen de régulation secondaire (400) échange de la chaleur avec de l'air soufflé ;
une canalisation de réfrigérant (700) pour connecter le compresseur (100), le condenseur (200), les moyens de régulation principal et secondaire (300, 400) et les évaporateurs principal et secondaire (500, 600) ensemble pour réaliser un cycle de refroidissement ; et
un moyen de jonction de réfrigérants incluant une pluralité de passages d'aspiration (810, 811) connectés avec les premier et deuxième tuyaux de réfrigérant (710, 720) des évaporateurs principal et secondaire (500, 600) pour aspirer le réfrigérant dans ceux-ci et un orifice de connexion (820) communiquant avec les passages d'aspiration (810, 811) et connecté à l'orifice d'aspiration (110) du compresseur (100) pour permettre que des réfrigérants étant passés à travers les passages d'aspiration (810, 811) se rejoignent à travers ceux-ci pour être introduits dans le compresseur (100), **caractérisé en ce que** le moyen de jonction de réfrigérants comprend un bloc joint (800) installé dans l'orifice d'aspiration (110) du compresseur (100), ledit bloc joint (800) ayant de manière intégrale les passages d'aspiration (810, 811) et l'orifice de connexion (820), dans lequel l'orifice de connexion (820) est prévu sur une ligne d'extension du passage d'aspiration (811) connecté avec le deuxième tuyau de réfrigérant (720).

2. Appareil de climatisation pour un véhicule selon la revendication 1, dans lequel le passage d'aspiration (810) connecté avec le premier tuyau de réfrigérant (710) de l'évaporateur principal (500) est coupé perpendiculairement par le passage d'aspiration (811) connecté avec le deuxième tuyau de réfrigérant (720) de l'évaporateur secondaire (600) à l'intérieur du bloc joint (800).

3. Appareil de climatisation pour un véhicule selon la revendication 1, dans lequel l'orifice de connexion (820) du bloc joint (800) est installé coaxialement avec l'orifice d'aspiration (110) du compresseur (100).

4. Appareil de climatisation pour un véhicule selon la revendication 1, dans lequel le deuxième tuyau de réfrigérant (720) de l'évaporateur secondaire (600) est installé selon un angle θ dans une plage d'environ 10° à 170° par rapport à un plan horizontal.
